(19) Europäisches Patentamt
European Patent Office
Office européen des brevets

(11) Veröffentlichungsnummer: **0 314 000**
**A2**

(12) # EUROPÄISCHE PATENTANMELDUNG

(21) Anmeldenummer: **88117535.0**

(22) Anmeldetag: **21.10.88**

(51) Int. Cl.[4]: **C08L 71/04 , C08L 25/00**

(30) Priorität: **30.10.87 DE 3736853**

(43) Veröffentlichungstag der Anmeldung:
**03.05.89 Patentblatt 89/18**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Gausepohl, Hermann, Dr.**
**Neuweg 10**
**D-6704 Mutterstadt(DE)**
Erfinder: **Boehlke, Klaus, Dr.**
**Gerhart-Hauptmann-Strasse 53**
**D-6717 Hessheim(DE)**
Erfinder: **Brandt, Hermann, Dr.**
**Keltenstrasse 30**
**D-6707 Schifferstadt(DE)**

(54) **Thermoplastische Formmassen.**

(57) Thermoplastische Formmassen, enthaltend als wesentliche Komponenten

A) 20 - 95 Gew.Teile eines Polyamids,
B) 5 - 80 Gew.Teile eines modifizierten Polyphenylenethers, hergestellt aus
$b_1$) 4,95 - 99,95 Gew.% eines Polyphenylenethers,
$b_2$) 0 - 90 Gew.% eines vinylaromatischen Polymeren,
$b_3$) 0,05 - 10 Gew.% eines Salzes aus mindestens einem $\alpha,\beta$-ungesättigten Carboxylat und einem mindestens zweiwertigen Kation,
$b_4$) 0 - 80 Gew.-% weiterer pfropfaktiver Monomerer und
$b_5$) 0 - 20 Gew.%, jeweils bezogen auf die Summe von $b_1$) bis $b_5$), eines Radikalstarters,

C) 0 - 90 Gew.Teile eines nicht-modifizierten Polyphenylenethers,
D) 0 - 45 Gew.Teile eines vinylaromatischen Polymeren und
E) 0 - 40 Gew.Teile eines schlagzäh modifizierenden Kautschuks,
wobei die Gew.Teile auf 100 Gew.Teile der Summe aus A, B, C, D und E bezogen sind, deren Herstellung und Verwendung.

EP 0 314 000 A2

## Thermoplastische Formmassen

Die Erfindung betrifft thermoplastische Formmassen, enthaltend als wesentliche Komponenten

A) 20 - 95 Gew.Teile eines Polyamids,

B) 5 - 80 Gew.Teile eines modifizierten Polyphenylenethers, hergestellt aus

$b_1$) 5 - 99,95 Gew.% eines Polyphenylenethers,

$b_2$) 0 - 90 Gew.% eines vinylaromatischen Polymeren,

$b_3$) 0,05 - 10 Gew.% eines Salzes aus mindestens einem $\alpha,\beta$-ungesättigten Carboxylat und einem mindestens zweiwertigen Kation,

$b_4$) 0 - 80 Gew.% weiterer pfropfaktiver Monomerer und

$b_5$) 0 - 20 Gew.%, jeweils bezogen auf die Summe von $b_1$) bis $b_5$), eines Radikalstarters.

C) 0 - 90 Gew.Teile eines nicht-modifizierten Polyphenylenethers,

D) 0 - 45 Gew.Teile eines vinylaromatischen Polymeren und

E) 0 - 40 Gew.Teile eines schlagzäh modifizierenden Kautschuks,

wobei die Gew.Teile auf 100 Gew.Teile der Summe aus A, B, C, D und E bezogen sind.

Außerdem betrifft die Erfindung ein Verfahren zur Herstellung derartiger Formmassen sowie deren Verwendung zur Herstellung von Formkörpern.

In der EP-A 24 120 und EP-A 46 040 werden Mischungen aus Polyamiden, nicht modifizierten Polyphenylenethern und Maleinsäureanhydrid und/oder Maleinsäureimid beschrieben. Die in diesen Schriften beschriebenen Massen bzw. die daraus hergestellten Formkörper weisen neben unbefriedigender Schlagzähigkeit und einem zu niedrigen Schmelzindex (MFI) eine zu hohe Wasseraufnahme und zu starke Dimensionsänderung bei Wasseraufnahme auf.

In der europäischen Anmeldung Nr. 87 108 068.5 wird vorgeschlagen, Polyamid mit Polyphenylenether zu mischen, der mit Fumarsäure, einem Maleinimid, einem Amid- oder Lactamgruppen enthaltenden Monomeren oder einem Halbester oder Halbamid einer $\alpha,\beta$-ungesättigten Dicarbonsäure gepfropft ist.

Aus der JP-A-50/139 841 waren mit $CO_2H$-gruppenhaltigen Styrolseitenketten gepfropfte Polyphenylenether bekannt, wobei die Carboxylgruppen der Seitenketten teilweise mit mono- oder divalenten Metallen neutralisiert sind.

Aufgabe der vorliegenden Erfindung war es, thermoplastische Formmassen zur Verfügung zu stellen, die neben einer guten Verarbeitbarkeit gute thermische, mechanische und dielektrische Eigenschaften aufweisen. Insbesondere sollten sich die Formmassen durch eine geringe Wasseraufnahme und eine geringe Längendehnung bei Wasseraufnahme auszeichnen.

Erfindungsgemäß wird diese Aufgabe durch die eingangs definierten thermoplastischen Formmassen gelöst.

Bevorzugte Massen dieser Art sind den Unteransprüchen zu entnehmen.

Weiterhin wurde ein Verfahren zur Herstellung dieser Polyphenylenetherharze sowie deren Verwendung gefunden.

Als Komponente A enthalten die erfindungsgemäßen Formmassen 20 bis 95 Gew.%, bezogen auf 100 Gew.Teile der Summe der Komponenten A) bis E), mindestens eines Polyamids. Geeignet sind lineare Polyamide z.B. mit einer relativen Viskosität von 2,2 bis 4,5, gemessen in 1 gew.-%iger Lösung in 96 gew.-%iger Schwefelsäure bei 23 °C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen sowie Terephthalsäure und Isophthalsäure sowie beliebige Mischungen dieser Säuren.

Als Diamine seien beispielsweise Alkandiamine mit 6 bis 12, insbesondere 6 bis 8 Kohlenstoffatomen, ferner m-Xylylendiamin, Bis(4-aminophenyl)methan, Bis-(4-aminocyclohexyl)methan oder Bis(4-aminophenyl)propan-2,2 oder deren Mischungen genannt.

Es ist auch möglich und manchmal vorteilhaft, Mischungen der genannten Polyamide zu verwenden. Besondere technische Bedeutung haben Polyamid-6 (Polycaprolactam), Polyamid-66 (Polyhexamethylenadipinamid) sowie Polyamide, die aus Hexamethylendiamin und Isophthalsäure sowie Terephthalsäure aufgebaut sind, erlangt.

Weiterhin seien genannt teilaromatische Copolyamide auf der Basis von Caprolactam, Adipinsäure, Hexamethylendiamin, Terephthalsäure und/oder Isophthalsäure. Von diesen seien Copolyamide mit wiederkehrenden Einheiten, die sich von Caprolactam und/oder Adipinsäure/Hexamethylendiamin einerseits sowie

Terephthalsäure und Hexamethylendiamin andererseits ableiten, genannt.

Bevorzugte Formmassen enthalten 25 bis 70, insbesondere 35 bis 65 Gew.Teile bezogen auf 100 Gew.-Teile der Summe der Komponenten A) bis E), an thermoplastischen Polyamiden.

Als Komponente B enthalten die erfindungsgemäßen Formmassen 5 bis 80, vorzugsweise 30 bis 75, insbesondere 35 bis 65 Gew.Teile, bezogen auf 100 Gew.Teile der Summe der Komponenten A) bis E), mindestens eines modifizierten Polyphenylenethers, der aus den Komponenten $b_1$), $b_2$), $b_3$), $b_4$) und $b_5$) hergestellt wird.

Unter "Modifizierung" soll dabei eine durch die Umsetzung der Komponenten $b_1$) bis $b_5$) hervorgerufene Veränderung der Verbindungen $b_1$) und gegebenenfalls $b_2$) verstanden werden.

Bei der Komponente $b_1$) handelt es sich um an sich bekannte Polyphenylenether, die beispielsweise durch oxidative Kupplung aus in o-Position disubstituierten Phenolen hergestellt werden können. Vorzugsweise werden solche Polyphenylether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente $b_1$), bezogen auf die Summe der Komponenten $b_1$) bis $b_5$), beträgt 5 bis 99,95, vorzugsweise 50 bis 99,7 und insbesondere 50 bis 95 Gew.%.

Die eingesetzten Polyphenylenether weisen im allgemeinen ein Molekulargewicht im Bereich von 10.000 bis 80.000, vorzugsweise von 15.000 bis 60.000 auf bestimmt nach dem in "Macromolecular Synthesis 1 (1977), S. 83, angegebenen Verfahren auf.

Nur beispielsweise seien hier einige Polyphenylenether aufgeführt, wie sie u.a. in O. Olabisi, l.c., S. 224 bis 230 und 245 genannt werden wie Poly(2,6-diethyl-1,4-phenylen)oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Die Komponente $b_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht (Gewichtsmittelwert) dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol, p-Methylstyrol genannt; in untergeordneten Anteilen (vorzugsweise nicht mehr als 20, insbesondere nicht mehr als 8 Gew.Teile), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $b_2$), bezogen auf die Summe von $b_1$) bis $b_5$), liegt im Bereich von 0 bis 90, vorzugsweise 0 bis 85 und insbesondere 0 bis 45 Gew.%.

Als wesentliche Komponente $b_3$) enthält der modifizierte Polyphenylenether B) ein Salz aus mindestens einem $\alpha,\beta$-ungesättigten Carboxylat und einem mindestens zweiwertigen Kation.

Als $\alpha,\beta$-ungesättigte Carboxylate kommen Verbindungen der allgemeinen Formel I

$$CH_2=CR^1COO^{\ominus} \qquad I,$$

wobei $R^1$ Wasserstoff oder ein $C_1$-$C_4$-Alkylrest sein kann, in Betracht, beispielsweise das Acrylat- oder das Methacrylatanion.

Die Salze dieser Verbindungen mit einem Kation eines Metalls der zweiten Haupt- oder Nebengruppe des Periodensystems der Elemente, wobei gegebenenfalls auch zwei verschiedene Carboxylate an ein Kation gebunden sein können, werden mit Vorteil eingesetzt. Insbesondere werden als Kationen $Ca^{\oplus\oplus}$, $Sr^{\oplus\oplus}$, $Ba^{\oplus\oplus}$ und speziell $Mg^{\oplus\oplus}$ oder $Zn^{\oplus\oplus}$ verwendet.

Daneben können auch Salze erfindungsgemäß eingesetzt werden, die aus einem bzw. mehreren der genannten Carboxylate und zweiwertigen Kationen von Diaminen oder zwei- oder mehrwertigen Kationen von Triaminen oder Polyaminen bestehen. Als Kationen von Diaminen können Verbindungen der allgemei-

nen Formel II

$$R^2R^{2'}-\overset{\oplus}{N}H-R^3-\overset{\oplus}{N}H-R^4R^{4'} \qquad II$$

verwendet werden, in denen $R^2$, $R^{2'}$, $R^4$ und $R^{4'}$ unabhängig voneinander Wasserstoff, eine Alkyl-, Cycloalkyl-, Aryl-, Aralkyl- oder Alkylarylgruppe mit bis zu 12 C-Atomen sind und $R^3$ ein $C_2$-$C_4$-Alkylenrest ist. Als Kationen von Tri- oder Polyaminen kommen Verbindungen der allgemeinen Formel III

$$H_3\overset{\oplus}{N}-\left[R^5-\overset{\oplus}{N}H_2\right]_n-H \qquad III$$

in Betracht, wobei $R^5$ eine $C_3$-$C_4$-Alkylengruppe, bevorzugt Dimethylen und n eine ganze Zahl von 3 bis 100, bevorzugt 2, darstellen.

Beispielhaft seien

$NH_3CH_2CH_2\overset{\oplus}{N}H_3$, $\overset{\oplus}{N}H_3CH_2CH_2CH_2\overset{\oplus}{N}H_3$, $CH_3\overset{\oplus}{N}H_2CH_2CH_2\overset{\oplus}{N}H_2C_2H_5$,

$(CH_3)_2\overset{\oplus}{N}HCH_2CH_2CH_2\overset{\oplus}{N}H(CH_3)_2$, $H_3\overset{\oplus}{N}CH_2CH_2NHCH_2CH_2-\overset{\oplus}{N}H_3$,

$H_3\overset{\oplus}{N}CH_2CH_2\overset{\oplus}{N}H_2CH_2CH_2\overset{\oplus}{N}H_3$, 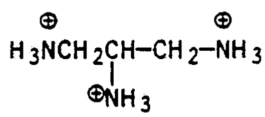 oder

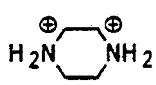

genannt.

Als Komponente $b_3$) werden Zinkdiacrylat und Zinkdimethacrylat und weiterhin Magnesiumdiacrylat und Magnesiumdimethacrylat besonders bevorzugt.

Der Anteil der Komponente $b_3$) beträgt 0,05 bis 10, bevorzugt 0,1 bis 5, insbesondere 0,3 bis 5 Gew.-%, bezogen auf die Summe der Komponenten $b_1$) bis $b_5$).

Gegebenenfalls können bei der Herstellung des modifizierten Polyphenylenethers B auch weitere Comonomere $b_4$) eingesetzt werden, die unter den Herstellungsbedingungen mit den Komponenten $b_1$) und gegebenenfalls $b_2$) reagieren bzw. auf diese aufpfropfen. Beispielsweise seien hier Acrylsäure, Methacrylsäure, Acrylate, Methacrylate oder Acrylnitril genannt, um nur einige aufzuführen.

Der Anteil der Komponente $b_4$) beträgt 0 bis 80, vorzugsweise 0 bis 45 und insbesondere nicht mehr als 20 Gew.%, bezogen auf die Summe der Komponenten $b_1$) bis $b_5$). Besonders bevorzugt werden Formmassen, die keine Komponente $b_4$) enthalten.

Als Komponente $b_5$) können bei der Herstellung der modifizierten Polyphenylenether B) bis zu 20 Gew.%, bezogen auf die Summe von $b_1$) bis $b_5$), an Radikalstartern eingesetzt werden.

Der Anteil der Komponente $b_5$) ist in der Regel geringer als die Summe der Anteile der Komponenten $b_3$) und $b_4$). Vorzugsweise handelt es sich dabei um ein organisches Peroxid oder eine Azo-Verbindung.

Bevorzugt sind organische Peroxide mit einer Halbwertszeit im Bereich von 1 bis 30 Sekunden bei 200 °C. Die Wahl des Radikalstarters richtet sich nach der gewünschten Reaktionstemperatur.

Beispielsweise seien als Radikalstarter genannt:

Di-tert.-butylperoxid, Cumolhydroperoxid oder Azo-bis-isobutyronitril genannt.

Häufig, insbesondere bei Temperaturen über 265 °C, hat es sich als vorteilhaft erwiesen, ohne Zusatz der Komponente $b_5$) zu arbeiten.

Zur Herstellung des modifizierten Polyphenylenethers B werden die Komponenten $b_1$) bis $b_5$) bei 250

bis 350 °C, vorzugsweise 265 bis 295 °C, also in der Schmelze miteinander umgesetzt. Hierzu eignen sich besonders Extruder, da in diesen im allgemeinen auch eine gute Durchmischung der Komponenten erzielt wird. Besonders gut für das erfindungsgemäße Verfahren eignet sich ein Zweischneckenextruder, der mit Knetelementen, zum Teil mit rückwärtsförderndem Gewinde, ausgerüstet sein kann. Die Komponenten $b_1$) bis $b_5$) werden im allgemeinen gemeinsam dosiert und in einer Aufschmelzzone des Extruders aufgeschmolzen. An diese Zone schließt sich üblicherweise die Reaktionszone an. Vor dem Produktaustrag befindet sich im allgemeinen eine Entgasungszone zur Entfernung der flüchtigen Bestandteile. Die Verweilzeit im Extruder beträgt 0,5 bis 10 Minuten, bevorzugt 1 bis 5 Minuten. Die ausgetragene Schmelze wird üblicherweise granuliert.

Prinzipiell ist die Herstellung des modifizierten Polyphenylenethers auch in jedem Reaktionsgefäß, welches eine Reaktion der Komponenten unter Einhaltung der notwendigen Bedingungen miteinander ermöglicht, durchführbar.

Manchmal ist es vorteilhaft, wenn die erfindungsgemäßen Formmassen als Komponente C) einen nichtmodifizierten Polyphenylenether enthalten. Dieser entspricht bevorzugt dem als Komponente $b_1$) eingesetzten Polyphenylenether, weshalb hier auf die dortigen Ausführungen zu geeigneten Verbindungen verwiesen wird. Der Anteil der Komponente C beträgt, falls vorhanden, maximal 90, vorzugsweise weniger als 45, insbesondere weniger als 20 Gew.%, bezogen auf 100 Gew.% der Summe der Komponenten A) bis E).

Als weiteren Bestandteil D) können die erfindungsgemäßen Formmassen gegebenenfalls in einer Menge bis zu 45, vorzugsweise bis zu 30, insbesondere bis zu 20 Gew.%, vinylaromatische Polymere enthalten (bezogen auf 100 Gew.Teile der Summe der Komponenten A) bis E)). Geeignet sind bevorzugt mit Polyphenylenethern verträgliche Polymere, wie sie bereits als Komponente $b_2$) beschrieben wurden. Für nähere Einzelheiten sei deshalb auf die Ausführungen zur Komponente $b_2$) verwiesen.

Die Komponente D) kann auch schlagzäh modifiziert sein. Solche Polymere sind dem Fachmann als schlagzähes Polystyrol bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrol-Butadien-, Styrol-b-Butadien, Acrylnitril-Butadien-, Ethylen-Propylen-, Polyacrylat- und Polyisopren-Kautschuke genannt.

Neben den in der Komponente D) gegebenenfalls vorhandenen, gepfropften Kautschuken, wie Polybutadien-, Acrylat-, Styrol-Butadien-, Polybuten-Kautschuk, hydrierten Styrol-Butadien-, Acrylnitril-Butadien-, Ethylen-Propylen- und Polyisopren-Kautschuken können diese auch ungepfropft als Komponente E) zugesetzt werden. Als Kautschuke E) seien weiter erwähnt thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Die Komponente E) kann in Mengen bis 40, vorzugsweise bis zu 30, insbesondere 0 bis 20 Gew.Teilen, bezogen auf 100 Gew.Teile der Summe der Komponenten A) bis E), in den erfindungsgemäßen Formmassen vorhanden sein.

Neben den Komponenten A) bis E) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.Teile, bezogen auf 100 Gew.Teile der Summe der Komponenten A) bis E).

Als Zusatzstoffe seien genannt Hitze- und Lichtstabilisatoren, Gleit- und Entformungsmittel, Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe wie Gipsfasern, synthetische Calciumsilikate, Kaolin, calciniertes Kaolin, Wollastonit, Talkum, Kreide, ferner Flammschutzmittel wie Phosphorverbindungen, z.B. Phosphat, Phosphorsäureester, Phosphorigsäureester, Phosphinsäureester, Phosphonigsäureester oder organische Phosphinoxide.

Auch andere als die unter A) bis E) genannten Polymere kommen als Zusatzstoffe in Betracht.

Die erfindungsgemäßen thermoplastischen Formmassen erhält man zweckmäßig durch Mischen der Einzelkomponenten bei Temperaturen von 250 bis 320 °C in üblichen Mischvorrichtungen, wie Knetern, Banbury-Mischern und Einschneckenextrudern, vorzugsweise jedoch in einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen manchmal eine Reaktion zwischen den Komponenten A) bis E) auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre geringe Wasseraufnahme und geringe Längendehnung bei Wasseraufnahme aus.

Sie eignen sich besonders zur Herstellung von Formkörpern durch Spritzguß oder Extrusion.

Beispiele 1 bis 5 und Vergleichsversuche 1 bis 3

Zur Ausführung von Beispielen und Vergleichsversuchen wurden folgende Komponenten verwendet:

Komponente A

Polyamid-6 (Polycaprolactam mit einem Molekulargewicht (Gewichtsmittelwert) von 38 000).

Herstellung modifizierter Polyphenylenether B

$B_1$:

9,35 kg Poly-(2,6-dimethyl-1,4-phenylen)ether (PPE) mit einer relativen Viskosität von 0,50 (gemessen in 1 gew.%iger Lösung in $CHCl_3$ bei 25°C), 0,5 kg Polystyrol (PS 144 C (BASF AG), Schmelzflußindex MFI bei 200°C/5 kg Belastung = 24 g/10 min) und 0,15 kg Zinkdiacrylat wurden in einen Zweischneckenextruder (ZSK 53; Werner 6 Pfleiderer) dosiert, in einem ersten Teil unter Verwendung von Knetelementen bei 280°C aufgeschmolzen, in einem zweiten Teil unter Kneten und Verwendung von Knetelementen bei 280°C umgesetzt und anschließend in einer Entgasungszone bei 280°C durch Anlegen von Vakuum entgast. Die mittlere Verweilzeit im Extruder betrug 3 min. Die austretende Schmelze wurde durch ein Wasserbad geleitet, granuliert und getrocknet.

$B_2$:

9,35 kg PPE, 0,5 kg Polystyrol (beide wie bei $B_1$) und 0,1 kg Zinkdiacrylat wurden wie bei der Herstellung von $B_1$ umgesetzt. Die mittlere Verweilzeit im Extruder betrug 3 min.

$B/V_1$:

Zum Vergleich wurde ein modifizierter Polyphenylenether aus 9,35 kg Polyphenylenether, 0,5 kg Polystyrol (beide wie bei $B_1$) und 0,15 kg Acrylsäure wie bei der Herstellung von $B_1$ hergestellt.

$B/V_2$:

Als zweites Vergleichsprodukt wurde ein aus 9,35 kg PPE, 0,5 kg Polystyrol und 0,15 kg Maleinsäureanhydrid (PPE und Polystyrol waren mit den bei der Herstellung von $B_1$ eingesetzten Produkten identisch) wie bei $B_1$ hergestellter modifizierter PPE eingesetzt.

<u>Komponente $C_1$:</u>

Poly-(2,6-dimethyl-1,4-phenylen)ether mit einer relativen Viskosität von 0,50 (gemessen in 1 gew.%iger Lösung in $CHCl_3$ bei 25°C).

<u>Komponente D:</u>

Polystyrol 144 C (BASF AG) mit einem Schmelzflußindex (MFI bei 200°C und 5 kg Belastung) von 24 g/10 min.

Komponente E:

Styrol-Butadien-Styrol-Dreiblockcopolymer mit einem Styrolgehalt von 30 Gew.% (Cariflex® TR 1102 ® eingetragenes Warenzeichen der Fa. Shell); Gewichtsmittel des Molekulargewichts Mw = 80 000.

Zur Herstellung der Formmassen wurden die Komponenten A) bis E) bzw. $B/V_1$) und $B/V_2$) wie in Tabelle 1 angegeben auf einem Zweischneckenextruder gemischt, die Formmassen wurden granuliert und im Spritzguß zu Formkörpern verarbeitet.

Die Ergebnisse der Messungen der Wasseraufnahme nach DIN 45495 (nach 24 h bei 23° C) und der Längendehnung nach Wasseraufnahme sind Tabelle 1 zu entnehmen.

Tabelle 1

| Beispiel | Vergleichs-versuch | Komponenten [kg] PA A | mod. PPE B | PPE C | PS D | Kautschuk E | Wasseraufnahmne+ DIN 45 495 [mg] | Längendehnung nach Wasseraufnahme [%] |
|---|---|---|---|---|---|---|---|---|
| 1 | | 5,4 | 4,6 $B_1$ | - | 0,3 | 1,2 | 23 | 1,6 |
| | 1* | 5,4 | 4,6 $B/V_1$ | - | 0,3 | 1,2 | 32 | 2,4 |
| 2 | | 5,4 | 4,6 $B_2$ | - | - | 1,4 | 25 | 1,7 |
| | 2* | 5,4 | 4,6 $B/V_2$ | - | - | 1,4 | 30 | 2,2 |
| 3 | | 5,0 | 4,0 $B_1$ | 10 | - | 1,3 | 20 | 1,4 |
| | 3* | 5,0 | 4,0 $B/V_1$ | 10 | - | 1,3 | 28 | 1,9 |
| 4 | | 5,4 | 4,0 $B_1$ | - | 1,0 | 0,6 | 22 | 1,3 |
| 5 | | 4,6 | 5,4 $B_1$ | - | 0,3 | 1,0 | 21 | 1,0 |

+24h, 23°C

## Ansprüche

1. Thermoplastische Formmassen, enthaltend als wesentliche Komponenten
A) 20 - 95 Gew.Teile eines Polyamids,
B) 5 - 80 Gew.Teile eines modifizierten Polyphenylenethers, hergestellt aus

$b_1$) 5 - 99,95 Gew.% eines Polyphenylenethers,
$b_2$) 0 - 90 Gew.% eines vinylaromatischen Polymeren,
$b_3$) 0,05 - 10 Gew.% eines Salzes aus mindestens einem $\alpha,\beta$-ungesättigten Carboxylat und einem mindestens zweiwertigen Kation,
$b_4$) 0 - 80 Gew.% weiterer pfropfaktiver Monomerer und
$b_5$) 0 - 20 Gew.%, jeweils bezogen auf die Summe von $b_1$) bis $b_5$), eines Radikalstarters,

C) 0 - 90 Gew.Teile eines nicht-modifizierten Polyphenylenethers,
D) 0 - 45 Gew.Teile eines vinylaromatischen Polymeren und
E) 0 - 40 Gew.Teile eines schlagzäh modifizierenden Kautschuks,
wobei die Gew.Teile auf 100 Gew.Teile der Summe aus A, B, C, D und E bezogen sind.

2. Thermoplastische Formmassen nach Anspruch 1, dadurch gekennzeichnet, daß sie
25 bis 70 Gew.Teile A,
30 bis 75 Gew.Teile B,
0 bis 45 Gew.Teile C,
0 bis 30 Gew.Teile D und
0 bis 30 Gew.Teile E
enthalten.

3. Thermoplastische Formmassen nach den Ansprüchen 1 bis 2, dadurch gekennzeichnet, daß sie
35 bis 65 Gew.Teile A,
35 bis 65 Gew.Teile B,
0 bis 20 Gew.Teile C,
0 bis 20 Gew.Teile D und
0 bis 20 Gew.Teile E
enthalten.

4. Thermoplastische Formmassen nach den Ansprüchen 1 bis 3, dadurch gekennzeichnet, daß B hergestellt ist aus
50 bis 99,7 Gew.% $b_1$,
0 bis 45 Gew.% $b_2$ und
0,3 bis 5 Gew.% $b_3$.

5. Thermoplastische Formmassen nach den Ansprüchen 1 bis 4, dadurch gekennzeichnet, daß $b_3$ ein Salz von Carboxylaten der allgemeinen Formel I

$$CH_2=CR^1COO^{\ominus} \quad I,$$

ist, wobei $R^1$ Wasserstoff oder einen $C_1$-$C_4$-Alkylrest darstellt, mit einem mindestens zweiwertigen Kation eines Metalls der zweiten Haupt- oder Nebengruppe des Periodensystems, eines Diamins, Triamins oder Polyamins.

6. Thermoplastische Formmassen nach den Ansprüchen 1 bis 5, wobei man das Kation auswählt aus der Gruppe $Mg^{\oplus}$, $Ca^{\oplus\oplus}$, $Sr^{\oplus\oplus}$, $Ba^{\oplus\oplus}$ und $Zn^{\oplus\oplus}$.

7. Thermoplastische Formmassen nach den Ansprüchen 1 bis 6, dadurch gekennzeichnet, daß $b_3$) Magnesiumdiacrylat oder Magnesiumdimethacrylat ist.

8. Thermoplastische Formmassen nach den Ansprüchen 1 bis 7, dadurch gekennzeichnet, daß $b_3$ Zinkdiacrylat oder Zinkdimethacrylat ist.

9. Verfahren zur Herstellung von thermoplastischen Formmassen gemäß den Ansprüchen 1 bis 8, wobei man die Komponenten $b_1$) bis $b_5$) bei 250 bis 350 °C im Verlauf von 0,5 bis 10 Minuten miteinander umsetzt und das so erhaltene modifizierte Polyphenylenoxid B) mit den Komponenten A) und C) bis E) bei Temperaturen von 250 bis 320 °C vermischt.

10. Verwendung der thermoplastischen Formmassen gemäß den Ansprüchen 1 bis 9 zur Herstellung von Formkörpern.